# EUROPEAN PATENT SPECIFICATION

(11) **EP 3 223 137 B1**
(45) Date of publication and mention of the grant of the patent: **06.04.2022**
(21) Application number: 16187434.2
(22) Date of filing: 06.09.2016
(51) Int. Cl.: G06F 3/12, H04N 21/472

(54) **DISPLAY CONTROL DEVICE, ELECTRONIC DEVICE, PROGRAM AND DISPLAY CONTROL METHOD**
ANZEIGESTEUERUNGSVORRICHTUNG, PROGRAMM UND ANZEIGESTEUERUNGSVERFAHREN
DISPOSITIF DE COMMANDE D'AFFICHAGE, DISPOSITIF ÉLECTRONIQUE, PROGRAMME ET PROCÉDÉ DE COMMANDE D'AFFICHAGE

(30) Priority: 22.03.2016 JP 2016056861
(43) Date of publication of application: 27.09.2017
(73) Proprietor: FUJIFILM Business Innovation Corp., Minato-ku Tokyo (JP)
(72) Inventor: YASUKAWA, Kiyoshi, Yokohama-shi, Kanagawa (JP); NOGUCHI, Nozomi, Yokohama-shi, Kanagawa (JP); NAKAMURA, Shinichi, Yokohama-shi, Kanagawa (JP); ISHIHARA, Ayaka, Yokohama-shi, Kanagawa (JP)
(74) Representative: Haseltine Lake Kempner LLP

(56) References cited:
- WO-A1-2011/071053
- US-A1- 2011 242 592
- US-A1- 2012 099 130
- Anonymous: "Results for all categories - Microsoft Community", , 4 November 2020 (2020-11-04), XP055746776, Retrieved from the Internet: URL:https://answers.microsoft.com/en-us/se arch/search?SearchTerm=Animate%20windows%2 0when%20minimizing%20or%20maximizing%20&ta b=&status=all&advFil=&IsSuggestedTerm=fals e&isFilterExpanded=undefined&CurrentScope. ForumName=all&CurrentScope.Filter=&Content TypeScope=QnA,Discussion,Article&page=1&so rt=Relevan [retrieved on 2020-11-04]

## Description

### TECHNICAL FIELD

A present invention relates to a display control device, an electronic device, a program and a display control method.

### RELATED ART

Patent Document 1 discloses a mechanism to support a switching operation of an application program that is in a foreground state.

Patent document 2 discloses a display control device in accordance with the preamble of claim 1. To manage the status of a job being executed, an information processing apparatus restricts acceptance of an instruction for screen transition from a user according to the managed status of the job while the job is being executed.
Patent Document 1: JP-A-2015-201074
Patent Document 2: WO2011/071053A1

### SUMMARY

An object of a present invention is to visually inform a user that a state notification screen can be displayed again, when the state notification screen for notifying the user of a state of a process is not displayed.

The present invention is defined in the independent claims, reference to which should now be made. Optional features are defined in the dependent claims. Features in aspects include the following.

In a first aspect, there is provided a display control device comprising a display control unit that displays a first operation image operated by a user when a state notification screen for notifying the user of a state of a process is not displayed and a second operation image operated by the user when the process is stopped, and displays movement when the state notification screen transits from a display to a non-display in a case where the first operation image is operated.

In a second aspect, there is provided the display control device according to the first aspect, wherein in a case where a re-display operation is performed which is a operation in accordance with the movement when the state notification screen transits from the display to the non-display, the display control unit displays again the state notification screen that is not displayed.

In a third aspect, there is provided the display control device according to the second aspect, wherein the process different in each of a plurality of functions is performed, and wherein in a case where the re-display operation in a screen relating to any one function among the plurality of functions is performed, the display control unit displays the state notification screen for notifying of the state of the process in the function.

In a fourth aspect, there is provided the display control device according to the second aspect, wherein the process different in each of the plurality of functions is performed, and wherein in a case where the re-display operation in the screen relating to a first function is performed, the display control unit displays the state notification screen for notifying of the state of the process in a second function that uses a resource used in the first function.

In a fifth aspect, there is provided the display control device according to the second aspect, wherein the process different in each of the plurality of functions is performed, and wherein the display control unit sequentially displays the state notification screen for notifying of the state of the process in the different function, each time the re-display operation is performed.

In a sixth aspect, there is provided the display control device according to the second aspect, wherein the process different in each of the plurality of functions is performed, and wherein if the re-display operation is performed, the display control unit displays a list of the state notification screen for notifying of the state of the process in the plurality of functions and displays the state notification screen of the function selected by the user in the list.

In a seventh aspect, there is provided the display control device according to any one of the second to sixth aspects, wherein the state notification screen is the screen for notifying that the process is being performed or the screen for notifying that an abnormality occurs in the process.

In a eighth aspect, there is provided the display control device according to any one of the second to seventh aspects, wherein in a case where the re-display operation is performed after the process is completed, the display control unit displays a completion notification screen for notifying that the process is completed.

In a ninth aspect, there is provided the display control device according to the eighth aspect, wherein the display control unit causes the completion notification screen to display a third operation image different from the first operation image operated when the completion notification screen is not displayed, and not to display the completion notification screen, without displaying the movement when the completion notification screen transits from the display to the non-display in a case where the third operating image is operated.

In a tenth aspect, there is provided the display control device according to the first aspect, wherein the process different in each of the plurality of functions is performed, and wherein when the screen relating to any one function among the plurality of functions is displayed, the display control unit displays the state notification screen for notifying of the state of the process in the function.

In a eleventh aspect, there is provided the display control device according to the ninth aspect, wherein when the screen relating to any one function among the plurality of functions is displayed, the display control unit partially displays the state notification screen.

In a twelfth aspect, there is provided an electronic device comprising: a display control device according to any one of the first to eleventh aspects; and a processing device that performs the process.

In a thirteenth aspect, there is provided a program causing a computer to function as a display control unit that displays a first operation image operated by a user when a state notification screen for notifying the user of a state of a process is not displayed and a second operation image operated by the user when a process is stopped, and displays movement when the state notification screen transits from a display to a non-display in a case where the first operation image is operated.

According to the first, twelfth and thirteenth aspects, it is possible to visually inform that a state notification screen can be displayed again with respect to a user, when the state notification screen for notifying the user of a state of a process is not displayed.

According to the second aspect, it is possible to suggest an operation to the user when the state notification screen is displayed again.

According to the third to sixth, tenth and eleventh aspects, it is possible to visually inform that the state notification screen for plural functions can be displayed again respectively with respect to the user.

According to the seventh aspect, it is possible to notify of a screen for notifying that the process is being performed, or that an abnormality occurs in the process.

According to the eighth aspect, it is possible to notify that the process is completed, in a case where a re-display operation is performed after the process is completed.

According to the ninth aspect, it is possible not to display a completion notification screen, without displaying the movement when the completion notification screen transits from a display to a non-display.

The state notification screen for notifying of the state of the process in the function is displayed, when the screen relating to the function is displayed.

### BRIEF DESCRIPTION OF THE DRAWINGS

Exemplary embodiments of the present invention will be described in detailed based on the following figures, wherein:
Fig. 1 is a drawing showing a hardware configuration of an image forming apparatus;
Fig. 2 is a drawing showing an example of a screen transition;
Fig. 3 is a drawing showing another example of the screen transition;
Fig. 4 is a drawing showing still another example of the screen transition; and
Fig. 5 is a drawing showing still another example of the screen transition.

### DETAILED DESCRIPTION

An example of an exemplary embodiment of the invention will be described.

### <Configuration>

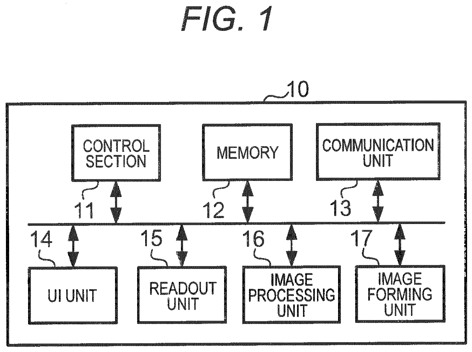

Fig. 1 is a drawing showing a hardware configuration of an image forming apparatus 1. The image forming apparatus 1 is an example of an information processing device according to the exemplary embodiment of the invention. The image forming apparatus 1 is provided with a control section 11, a memory 12, a communication unit 13, a user interface (UI) unit 14, a readout unit 15, an image processing unit 16, and an image forming unit 17.

The control section 11 is provided with a calculation device such as a central process unit (CPU), and a storage device such as a read only memory (ROM) or a random access memory (RAM), and functions as a display control unit that performs display control as described below. The ROM stores firmware in which a starting procedure of hardware or an operating system (OS) is described. The RAM is used for storage of data when the CPU performs calculation. The memory 12 is provided with, for example, a semiconductor memory or a hard disk storage device or the like and stores an application program for realizing various functions, in addition to an OS. The communication unit 13 is provided with a communication interface (I/F) for performing communication with an external electronic device. The communication unit 13 is connected to a communication line such as a local area network (LAN).

A UI unit 14 includes a display and an operation unit. The display is provided with, for example, a liquid crystal display device, and displays a screen on a display surface so that a user operates the image forming apparatus 1. The operation unit 15 is provided with, for example, a touch panel provided so as to cover the display surface of the display 14 or a keyboard provided at a position adjacent to the display surface or the like, receives an operation performed by the user, and outputs a signal in accordance with the operation to the control section 11. The control section 11 controls the image forming apparatus 1 in accordance with the contents of the operation.

The readout unit 15 generates image data by optically reading out an original document. The readout unit 15 is, for example, an image scanner provided with platen glass, a light source, an optical system, a color filter and an image pickup device or the like, in which the light source emits light with respect to the loaded original document on the platen glass, and reflected light reflected by the original document is incident on the image pickup device via the optical system and the color filter. The image pickup device converts the incident light into an image signal and outputs the signal to the image processing unit 16. The image processing unit 16 performs an image process such as a screen process or color conversion on the image signal output from the readout unit 15, and generates raster data. The image forming unit 17 forms an image on a sheet that is a recording medium based on the raster data that the image processing unit 16 generates. An image-forming method is, for example, an electrophotographic method or an ink jet method or the like.

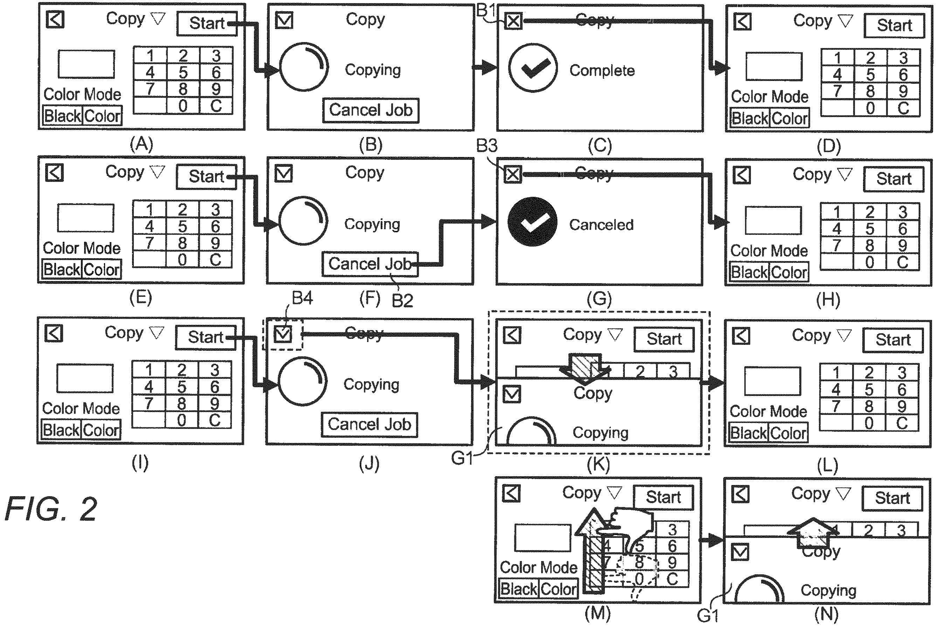

Fig. 2 is a drawing showing a screen transition shown in the UI unit 14. For example, a copy application program is an application program for realizing a copy function for copying the original document. If a start button of the copy application program on a home screen is operated, the control section 11 displays a copy setting screen, as shown in (A) of Fig. 2. The copy setting screen is the screen for operating the copy function, specifically, the screen for setting a condition of the original document readout or a condition of image printing or the like.

Here, although the copy function is performed if a start button in (A) of Fig. 2 is operated, the control section 11 displays a process executing screen as shown in (B) of Fig. 2 during the operation thereof. The process executing screen is one of a state notification screen for notifying the user of a state of a process in the image forming apparatus 1. If the process relating to the copy is completed, the control section 11 displays a process completion screen as shown in (C) of Fig. 2. If a non-display button B1 included in the process completion screen is operated by the user, the control section 11 does not display the process completion screen and returns to the copy setting screen ((D) of Fig. 2).

If the copy function is performed ((E) of Fig. 2) by the start button being operated in the copy setting screen, and a cancel button B2 for stopping the process is operated by the user ((F) of Fig. 2) at the stage where the process executing screen is displayed, the control section 11 displays a process stop screen as shown in (G) of Fig. 2. If a non-display button B3 included in the process stop screen is operated by the user, the control section 11 does not display the process stop screen, and returns to the copy setting screen ((H) of Fig. 2).

If the copy function is performed ((I) of Fig. 2) by the start button being operated in the copy setting screen, and a button B4 for not displaying the process executing screen is operated by the user ((J) of Fig. 2) at the stage where the process executing screen is displayed, the control section 11, as shown in (K) of Fig. 2, performs an animation display so that the process executing screen G1 moves to a lower side (front side as viewed from the user) and goes out to the outside of a display area of the UI unit 14. In this manner, the control section 11 does not display the process executing screen G1 and returns to the copy setting screen ((L) of Fig. 2). That is, the animation display is equivalent to displaying the movement when the process executing screen transits from a display to a non-display.

If the user operates the operation that is a reverse movement of the movement of the animation display, that is, a so-called flick operation ((M) of Fig. 2) of moving a finger from the lower side (front side as viewed from the user) of the display area of the UI unit 14 to an upper side (direction away where viewed from the user) in the copy setting screen, the control section 11, as shown in (N) of Fig. 2, performs the animation display so that the process executing screen which is a non-display moves to the upper side from the outside of the display area of the lower side of the UI unit 14. In this manner, the control section 11 causes the process executing screen G1 to be displayed again. This movement is referred to as a re-display operation. The re-display operation is equivalent to the operation in accordance with the movement when the process executing screen transits from the display to the non-display.

Although the above-described button B1 and the button B4 are both an operator image for not displaying the screen, a design thereof and an operated behavior are different from each other. That is, the button B1 is the design called "×", and while the animation display is not performed in accordance with the movement of the process completion screen when the screen is transited from the display to the non-display, the button B4 is the design that imitates the downward arrow, and the animation display is performed in accordance with the movement of the process executing screen when the screen is transited from the display to the non-display. The operator image of the design with "×" is generally used to mean the stopping of a process or a screen deletion in some cases. Therefore, if the button B4 adopts this design, it is unlikely to inform the user that the re-display of the process executing screen is possible. The button B4 adopts the design that imitates the downward arrow indicating a movement direction when the process executing screen is the non-display, and represents the movement of the process executing screen in the operation. Therefore, a re-display method of the process executing screen is suggested to the user.

Although Fig. 2 is an example of the copy function, the function that the image forming apparatus 1 realizes, in addition to the copy function, for example, is a scan function or a facsimile function or the like, and a process in which each of the plural functions are different is performed. In a case where the above-described re-display operation is performed in a setting screen relating to any one function among the plural functions, the control section 11 displays the state notification screen for notifying of the state of the process in the function. That is, in a case where the above-described re-display operation is performed in the copy setting screen, the control section 11 displays the state notification screen in the copy function. In a case where the above-described re-display operation is performed in the scan setting screen, the control section 11 displays the state notification screen in the scan function. In a case where the user wishes to display the state notification screen again after the state notification screen is not displayed, it is natural to start the function in accordance with the state notification screen. Therefore, in a case where the re-display operation is performed in the setting screen of the corresponding function as described above, it may be said that it is intuitively and easily imagined for the user to display the state notification screen.

Here, for example, in the process of executing a certain function, there is a case where any error occurs. At this time, the control section 11 displays an error notification screen for notifying that the process is in an error state. The error notification screen is one of the state notification screens for notifying the user of the state of the process in the image forming apparatus 1. Accordingly, even for the error notification screen, as well as the process executing screen, it is possible not to display the screen by the button operation for the non-display or to display the screen again in accordance with the re-display operation.

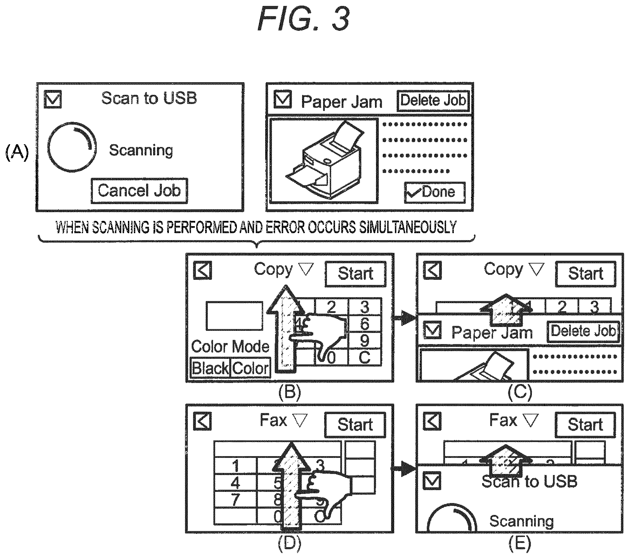

Fig. 3 is a drawing showing a screen transition in a case where the error such as a paper jam occurs when the function of storing readout data of the original document (scan to USB) in the storage medium connected by a USB to the image forming apparatus 1 and the above-described copy function are simultaneously realized. A left side screen of (A) of Fig. 3 is the process executing screen in this case, and a right side screen of (B) of Fig. 3 is the error notification screen in this case. Here, the copy setting screen is set to be displayed as described in (B) of Fig. 3. In a case where the different function are simultaneously realized in this manner and the same resource in these functions (image forming unit 17) is used, if the re-display operation is performed, priority is given to the re-display of the error notification screen. In this manner, in a case where the process different in each of the plural functions is performed and the re-display operation in the screen relating to a first function is performed, the state notification screen for notifying of the state of the process in a second function that uses the resource used in the first function is displayed.

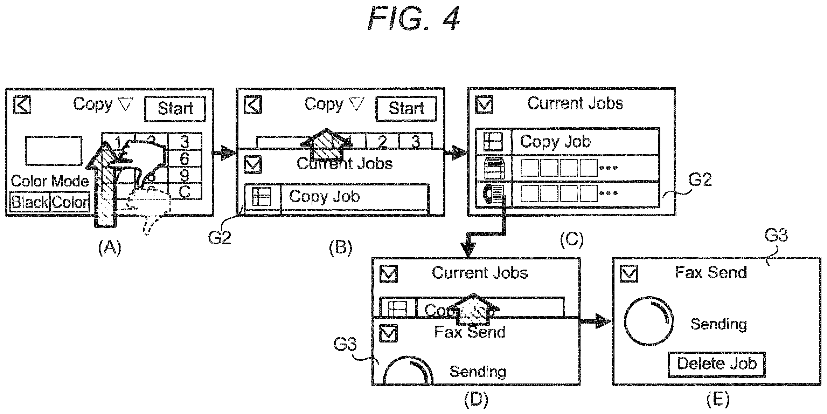

Additionally, in a case where the plural functions are operated in parallel or in a case where any one of the plural functions is on standby for the process, if the re-display operation is performed ((A) of Fig. 4), the control section 11 is displayed with an animation so that a function list screen G2 moves to the upper side from the outside of the display area of the lower side of the UI unit 14. If the function that the user wishes to display is selected ((C) of Fig. 4), the control section 11 is displayed with the animation so that a state notification screen G3 relating to the selected function moves to the upper side from the outside of the display area of the lower side of the UI unit 14 ((D) and (E) of Fig. 4).

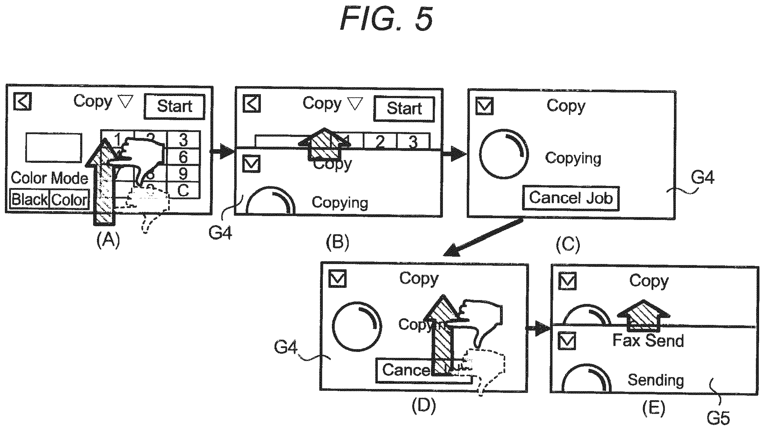

Each time the re-display operation is performed, the control section 11 may display the state notification screen in a predetermined order. That is, as shown in (A) to (E) of Fig. 5, the control section 11 displays a state notification screen G4 relating to the first function again at the first re-display operation ((A) to (C) of Fig. 4), and displays a state notification screen G5 relating to the second function again at the second re-display operation ((D) and (E) Fig. 4). As a variation in the predetermined order, it is conceivable to adopt the method of displaying in the order from those in which the start of the process is late (display from those of which the start of the process is most recently instructed), displaying in the order from those in which the start of the process is early, displaying in the order in which the image forming apparatus 1 starts the process, displaying from the state notification screen related to the function of the setting screen which is already displayed, and displaying the state notification screen of the function which uses the same resource as the function of the setting screen already displayed.

Furthermore, after the state notification screen is not displayed, if the setting screen of the function is not displayed and transited to the other screen, the user no longer understand the re-display method of the state notification screen. Then, the control section 11 may display the state notification screen that is not displayed again at the timing of starting the related function.

The process completion screen may be displayed again in accordance with the re-display operation. In this case, the display of the process completion screen may be limited to only once. That is, the process completion screen that is displayed once may not be displayed again.

According to the exemplary embodiment, the button B4 which instructs the state notification screen not to be displayed, adopts the design that imitates the downward arrow that refers to the direction of the movement when the process executing screen is not displayed, and represents the non-display of the movement of the state notification screen at the time of operation of this button. In this manner, the re-display method of the state notification screen may be suggested to the user.

Furthermore, the state notification screen may not be displayed on the entire display area of the UI unit 14, and may be held to the display of a portion of the display area only. In the above-described exemplary embodiment, although the example of the operation unit having the function of the touch panel is described, the operation unit may include a pointing device such as a mouse.

In the above-described exemplary embodiment, although the example of realizing the above function by the control section 11 executing the program is described, the above function may be mounted in a hardware circuit. The program is stored and provided in a computer readable recording medium such as an optical recording medium, a semiconductor memory or the like, and may be installed in the information processing device by reading out the program from the recording medium. This program may be provided in an electrical communication line.

The foregoing description of the exemplary embodiments of the present invention has been provided for the purposes of illustration and description. It is not intended to be exhaustive or to limit the invention to the precise forms disclosed. Obviously, many modifications and variations will be apparent to practitioners skilled in the art. The embodiments were chosen and described in order to best explain the principles of the invention and its practical applications, thereby enabling others skilled in the art to understand the invention for various embodiments and with the various modifications as are suited to the particular use contemplated. It is intended that the scope of the invention be defined by the following claims.

## Claims

1. A display control device comprising a display control unit (11) that is arranged to display, in a display area (14), a state notification screen for notifying a user of a state of a process, the state notification screen including a first operation image operable by the user to cause the state notification screen not to be displayed, and to display a second operation image operable by the user to cause the process to be canceled; **characterized in that**:
the first operation image is a design that imitates an arrow indicating a movement direction of the state notification screen;
the display control unit (11) is responsive to operation of the first operation image to transition the state notification screen to a non-displayed state by performing an animation display of the state notification screen which moves the state notification screen in the movement direction that the arrow indicates and to go outside the display area (14); and **in that**
in a case where a re-display operation is performed by the user which is a movement that is the reverse of the animation display of the state notification screen which moves the state notification screen in the opposite direction from the movement direction that the arrow indicates from outside the display area (14), the display control unit (11) is arranged to display again the state notification screen.

2. The display control device according to claim 1,
wherein the display control device is applied to an image forming apparatus (1) having a plurality of functions and performing a process different in each of the plurality of functions, and
wherein in a case where the re-display operation in a screen relating to any one function among the plurality of functions is performed, the display control unit (11) is arranged to display the state notification screen for notifying of the state of the process in the function.

3. The display control device according to claim 1,
wherein the display control device is applied to an image forming apparatus (1) having a plurality of functions and performing a process different in each of the plurality of functions, and
wherein in a case where the re-display operation in the screen relating to a first function is performed, the display control unit (11) is arranged to display the state notification screen for notifying of the state of the process in a second function that uses a resource used in the first function.

4. The display control device according to claim 1,
wherein the display control device is applied to an image forming apparatus (1) having a plurality of functions and performing a process different in each of the plurality of functions, and
wherein the display control unit (11) is arranged to sequentially display the state notification screen for notifying of the state of the process in the different function, each time the re-display operation is performed.

5. The display control device according to claim 1,
wherein the display control device is applied to an image forming apparatus (1) having a plurality of functions and performing a process different in each of the plurality of functions, and
wherein if the re-display operation is performed, the display control unit (11) is arranged to display a list of the state notification screens for notifying of the state of the process in the plurality of functions and displays the state notification screen of the function selected by the user in the list.

6. The display control device according to any one of claims 1 to 5, wherein the state notification screen is the screen for notifying that the process is being performed or the screen for notifying that an abnormality occurs in the process.

7. The display control device according to any one of claims 1 to 6, wherein in a case where the re-display operation is performed after the process is completed, the display control unit (11) is arranged to display a completion notification screen for notifying that the process is completed.

8. The display control device according to claim 7, wherein the display control unit (11) is arranged to cause the completion notification screen to display a third operation image different from the first operation image, and operable by the user to cause the completion notification screen not to be displayed, wherein the display control unit (11) does not perform an animation display of the completion notification screen in a case where the third operation image is operated.

9. The display control device according to claim 1,
wherein the display control device is applied to an image forming apparatus (1) having a plurality of functions and performing a process different in each of the plurality of functions, and
wherein when the screen relating to any one function among the plurality of functions is displayed, the display control unit (11) is arranged to display the state notification screen for notifying of the state of the process in the function.

10. The display control device according to claim 9, wherein when the screen relating to any one function among the plurality of functions is displayed, the display control unit (11) is arranged to display the state notification screen in part of the display area.

11. An electronic device comprising:
a display control device according to any one of claims 1 to 10; and
a processing device (1) that performs the process.

12. A display control method comprising displaying, in a display area (14), a state notification screen for notifying a user of a state of a process, the state notification screen including a first operation image operable by the user to cause the state notification screen not to be displayed, and displaying a second operation image operable by the user to cause the process to be canceled; **characterized by**:
the first operation image is a design that imitates an arrow indicating a movement direction of the state notification screen;
in response to operation of the first operation image, transitioning the state notification screen to a non-displayed state by performing an animation display of the state notification screen which moves the state notification screen in the movement direction that the arrow indicates and to go outside the display area (14); and
in a case where a re-display operation is performed by the user which is a movement that is the reverse of the animation display of the state notification screen which moves the state notification screen in the opposite direction from the movement direction that the arrow indicates from outside the display area (14), displaying again the state notification screen.

13. A computer program comprising instructions to cause the device of claim 1-10 to execute the steps of the method of claim 12.

## Patentansprüche

1. Anzeigesteuervorrichtung, umfassend eine Anzeigesteuereinheit (11), die angepasst ist, um in einem Anzeigebereich (14) einen Zustandsbenachrichtigungsbildschirm anzuzeigen, um einen Benutzer über einen Zustand eines Prozesses zu benachrichtigen, wobei der Zustandsbenachrichtigungsbildschirm ein erstes Betätigungsbild beinhaltet, das von dem Benutzer betätigt werden kann, um zu bewirken, dass der Zustandsbenachrichtigungsbildschirm nicht angezeigt wird, und ein zweites Betätigungsbild anzuzeigen, das von dem Benutzer betätigt werden kann, um zu bewirken, dass der Prozess abgebrochen wird; **dadurch gekennzeichnet, dass**:
wobei das erste Betätigungsbild ein Design ist, das einen Pfeil imitiert, der eine Bewegungsrichtung des Zustandsbenachrichtigungsbildschirms angibt;
wobei die Anzeigesteuereinheit (11) auf eine Betätigung des ersten Betätigungsbilds reagiert, um den Zustandsbenachrichtigungsbildschirm in einen nicht angezeigten Zustand zu wechseln, indem sie eine Animationsanzeige des Zustandsbenachrichtigungsbildschirms ausführt, die den Zustandsbenachrichtigungsbildschirm in die Bewegungsrichtung bewegt, die der Pfeil anzeigt, und um außerhalb des Anzeigebereichs (14) zu gehen; und dadurch, dass
in einem Fall, in dem eine erneute Anzeigebetätigung durch den Benutzer ausgeführt wird, die eine Bewegung ist, die die Umkehrung der Animationsanzeige des Zustandsbenachrichtigungsbildschirms ist, die den Zustandsbenachrichtigungsbildschirm in die entgegengesetzte Richtung zu der Bewegungsrichtung bewegt, die der Pfeil von außerhalb des Anzeigebereichs (14) angibt, die Anzeigesteuereinheit (11) angeordnet ist, um den Zustandsbenachrichtigungsbildschirm erneut anzuzeigen.

2. Anzeigesteuervorrichtung gemäß Anspruch 1,
wobei die Anzeigesteuervorrichtung auf ein Bilderzeugungsgerät (1) angewendet wird, das eine Vielzahl von Funktionen aufweist und einen in jeder der Vielzahl von Funktionen unterschiedlichen Prozess ausführt, und
wobei in einem Fall, in dem die erneute Anzeigebetätigung in einem Bildschirm, der sich auf eine beliebige Funktion aus der Vielzahl von Funktionen bezieht, ausgeführt wird, die Anzeigesteuereinheit (11) angeordnet ist, um den Zustandsbenachrichtigungsbildschirm anzuzeigen, um den Zustand des Prozesses in der Funktion zu benachrichtigen.

3. Anzeigesteuervorrichtung gemäß Anspruch 1,
wobei die Anzeigesteuervorrichtung auf ein Bilderzeugungsgerät (1) angewendet wird, das eine Vielzahl von Funktionen aufweist und einen in jeder der Vielzahl von Funktionen unterschiedlichen Prozess ausführt, und
wobei die Anzeigesteuereinheit (11) in einem Fall, in dem die erneute Anzeigebetätigung auf dem Bildschirm, der sich auf eine erste Funktion bezieht, ausgeführt wird, angeordnet ist, um den Zustandsbenachrichtigungsbildschirm zum Benachrichtigen des Zustands des Prozesses in einer zweiten Funktion zu benachrichtigen, die eine Ressource verwendet, die in der ersten Funktion verwendet wird.

4. Anzeigesteuervorrichtung gemäß Anspruch 1,
wobei die Anzeigesteuervorrichtung auf ein Bilderzeugungsgerät (1) angewendet wird, das eine Vielzahl von Funktionen aufweist und einen in jeder der Vielzahl von Funktionen unterschiedlichen Prozess ausführt, und
wobei die Anzeigesteuereinheit (11) so angeordnet ist, dass sie jedes Mal, wenn die erneute Anzeigebetätigung ausgeführt wird, nacheinander den Zustandsbenachrichtigungsbildschirm anzeigt, um den Zustand des Prozesses in der verschiedenen Funktion zu benachrichtigen.

5. Anzeigesteuervorrichtung gemäß Anspruch 1,
wobei die Anzeigesteuervorrichtung auf ein Bilderzeugungsgerät (1) angewendet wird, das eine Vielzahl von Funktionen aufweist und einen in jeder der Vielzahl von Funktionen unterschiedlichen Prozess ausführt, und
wobei, wenn die erneute Anzeigebetätigung ausgeführt wird, die Anzeigesteuereinheit (11) angeordnet ist, um eine Liste der Zustandsbenachrichtigungsbildschirme anzuzeigen, um den Zustand des Prozesses in der Vielzahl von Funktionen zu benachrichtigen, und den Zustandsbenachrichtigungsbildschirm der von dem Benutzer in der Liste ausgewählten Funktion anzuzeigen.

6. Anzeigesteuervorrichtung gemäß einem der Ansprüche 1 bis 5, wobei der Zustandsbenachrichtigungsbildschirm der Bildschirm ist, um zu benachrichtigen, dass der Prozess ausgeführt wird, oder der Bildschirm, um zu benachrichtigen, dass eine Anomalie in dem Prozess auftritt.

7. Anzeigesteuervorrichtung gemäß einem der Ansprüche 1 bis 6, wobei in einem Fall, in dem die erneute Anzeigebetätigung ausgeführt wird, nachdem der Prozess abgeschlossen ist, die Anzeigesteuereinheit (11) angeordnet ist, um einen Abschlussbenachrichtigungsbildschirm anzuzeigen, um zu benachrichtigen, dass der Prozess abgeschlossen ist.

8. Anzeigesteuervorrichtung gemäß Anspruch 7, wobei die Anzeigesteuereinheit (11) angeordnet ist, um zu bewirken, dass der Abschlussbenachrichtigungsbildschirm ein drittes Betätigungsbild anzeigt, das sich von dem ersten Betätigungsbild unterscheidet, und von dem Benutzer betätigt werden kann, um zu bewirken, dass der Abschlussbenachrichtigungsbildschirm nicht angezeigt wird, wobei die Anzeigesteuereinheit (11) in einem Fall keine Animationsanzeige des Abschlussbenachrichtigungsbildschirms ausführt, in dem das dritte Betätigungsbild betätigt wird.

9. Anzeigesteuervorrichtung gemäß Anspruch 1,
wobei die Anzeigesteuervorrichtung auf ein Bilderzeugungsgerät (1) angewendet wird, das eine Vielzahl von Funktionen aufweist und einen in jeder der Vielzahl von Funktionen unterschiedlichen Prozess ausführt, und
wobei, wenn der Bildschirm, der sich auf eine beliebige Funktion aus der Vielzahl von Funktionen bezieht, angezeigt wird, die Anzeigesteuereinheit (11) angeordnet ist, um den Zustandsbenachrichtigungsbildschirm anzuzeigen, um den Zustand des Prozesses in der Funktion zu benachrichtigen.

10. Anzeigesteuervorrichtung gemäß Anspruch 9, wobei, wenn der Bildschirm, der sich auf eine Funktion aus der Vielzahl von Funktionen bezieht, angezeigt wird, die Anzeigesteuereinheit (11) angeordnet ist, um den Zustandsbenachrichtigungsbildschirm in einem Teil des Anzeigebereichs anzuzeigen.

11. Elektronische Vorrichtung, umfassend:
eine Anzeigesteuervorrichtung gemäß einem der Ansprüche 1 bis 10; und eine Verarbeitungsvorrichtung (1), die den Prozess ausführt.

12. Anzeigesteuerungsverfahren, umfassend ein Anzeigen eines Zustandsbenachrichtigungsbildschirms in einem Anzeigebereich (14), um einen Benutzer über einen Zustand eines Prozesses zu benachrichtigen, wobei der Zustandsbenachrichtigungsbildschirm ein erstes Betätigungsbild beinhaltet, das von dem Benutzer betätigt werden kann, um zu bewirken, dass der Zustandsbenachrichtigungsbildschirm nicht angezeigt wird, und ein Anzeigen eines zweiten Betätigungsbilds, das von dem Benutzer betätigt werden kann, um zu bewirken, dass der Prozess abgebrochen wird; **dadurch gekennzeichnet, dass**:
wobei das erste Betätigungsbild ein Design ist, das einen Pfeil imitiert, der eine Bewegungsrichtung des Zustandsbenachrichtigungsbildschirms angibt;
als Reaktion auf eine Betätigung des ersten Betätigungsbilds, Wechseln des Zustandsbenachrichtigungsbildschirms in einen nicht angezeigten Zustand durch Ausführen einer Animationsanzeige des Zustandsbenachrichtigungsbildschirms, die den Zustandsbenachrichtigungsbildschirm in die Bewegungsrichtung bewegt, die der Pfeil angibt, und um außerhalb des Anzeigebereichs (14) zu gehen; und in einem Fall, in dem eine erneute Anzeigebetätigung durch den Benutzer ausgeführt wird, die eine Bewegung ist, die die Umkehrung der Animationsanzeige des Zustandsbenachrichtigungsbildschirms ist, die den Zustandsbenachrichtigungsbildschirm in die entgegengesetzte Richtung zu der Bewegungsrichtung bewegt, die der Pfeil von außerhalb des Anzeigebereichs (14) angibt, erneutes Anzeigen des Zustandsbenachrichtigungsbildschirms.

13. Computerprogramm, umfassend Anweisungen, um zu bewirken, dass die Vorrichtung gemäß Anspruch 1-10 die Schritte des Verfahrens gemäß Anspruch 12 ausführt.

## Revendications

1. Un dispositif de commande d'affichage comprenant une unité de commande d'affichage (11) qui est agencée pour afficher, dans une zone d'affichage (14), un écran de notification d'état pour notifier à un utilisateur un état d'un processus, l'écran de notification d'état comprenant une première image d'opération actionnable par l'utilisateur pour faire en sorte que l'écran de notification d'état ne soit pas affiché, et pour afficher une deuxième image d'opération actionnable par l'utilisateur pour faire en sorte que le processus soit annulé ; **caractérisé en ce que**
la première image d'opération est un dessin qui imite une flèche indiquant une direction de mouvement de l'écran de notification d'état ;
l'unité de commande d'affichage (11) est sensible au fonctionnement de la première image d'opération pour faire passer l'écran de notification d'état à un état non affiché en effectuant un affichage d'animation de l'écran de notification d'état qui déplace l'écran de notification d'état dans la direction de mouvement que la flèche indique et pour sortir de la zone d'affichage (14) ; et **en ce que** dans le cas où une opération de réaffichage est effectuée par l'utilisateur, qui est un mouvement qui est l'inverse de l'affichage d'animation de l'écran de notification d'état qui déplace l'écran de notification d'état dans la direction opposée à la direction de mouvement que la flèche indique depuis l'extérieur de la zone d'affichage (14), l'unité de commande d'affichage (11) est agencée pour afficher à nouveau l'écran de notification d'état.

2. Le dispositif de commande d'affichage selon la revendication 1,
dans lequel le dispositif de commande d'affichage est appliqué à un appareil de formation d'image (1) ayant une pluralité de fonctions et exécutant un processus différent dans chacune de la pluralité de fonctions, et
dans lequel, dans le cas où l'opération de réaffichage dans un écran relatif à une fonction quelconque parmi la pluralité de fonctions est effectuée, l'unité de commande d'affichage (11) est agencée pour afficher l'écran de notification d'état pour notifier l'état du processus dans la fonction.

3. Le dispositif de commande d'affichage selon la revendication 1,
dans lequel le dispositif de commande d'affichage est appliqué à un appareil de formation d'image (1) ayant une pluralité de fonctions et exécutant un processus différent dans chacune de la pluralité de fonctions, et
dans lequel, dans le cas où l'opération de réaffichage dans l'écran relatif à une première fonction est effectuée, l'unité de commande d'affichage (11) est agencée pour afficher l'écran de notification d'état pour notifier l'état du processus dans une deuxième fonction qui utilise une ressource utilisée dans la première fonction.

4. Le dispositif de commande d'affichage selon la revendication 1,
dans lequel le dispositif de commande d'affichage est appliqué à un appareil de formation d'image (1) ayant une pluralité de fonctions et exécutant un processus différent dans chacune de la pluralité de fonctions, et
dans lequel l'unité de commande d'affichage (11) est agencée pour afficher séquentiellement l'écran de notification d'état pour notifier l'état du processus dans la fonction différente, chaque fois que l'opération de réaffichage est effectuée.

5. Le dispositif de commande d'affichage selon la revendication 1,
dans lequel le dispositif de commande d'affichage est appliqué à un appareil de formation d'image (1) ayant une pluralité de fonctions et exécutant un processus différent dans chacune de la pluralité de fonctions,
dans lequel si l'opération de réaffichage est effectuée, l'unité de commande d'affichage (11) est agencée pour afficher une liste des écrans de notification d'état pour notifier l'état du processus dans la pluralité de fonctions et affiche l'écran de notification d'état de la fonction sélectionnée par l'utilisateur dans la liste.

6. Le dispositif de commande d'affichage selon l'une quelconque des revendications 1 à 5, dans lequel l'écran de notification d'état est l'écran permettant de notifier que le processus est en cours d'exécution ou l'écran permettant de notifier qu'une anomalie se produit dans le processus.

7. Le dispositif de commande d'affichage selon l'une quelconque des revendications 1 à 6, dans lequel, dans le cas où l'opération de réaffichage est effectuée après que le processus est terminé, l'unité de commande d'affichage (11) est agencée pour afficher un écran de notification d'achèvement pour notifier que le processus est terminé.

8. Le dispositif de commande d'affichage selon la revendication 7, dans lequel l'unité de commande d'affichage (11) est agencée pour faire en sorte que l'écran de notification d'achèvement affiche une troisième image d'opération différente de la première image d'opération, et actionnable par l'utilisateur pour faire en sorte que l'écran de notification d'achèvement ne soit pas affiché, dans lequel l'unité de commande d'affichage (11) n'effectue pas un affichage d'animation de l'écran de notification d'achèvement dans le cas où la troisième image d'opération est actionnée.

9. Le dispositif de commande d'affichage selon la revendication 1,
dans lequel le dispositif de commande d'affichage est appliqué à un appareil de formation d'image (1) ayant une pluralité de fonctions et exécutant un processus différent dans chacune de la pluralité de fonctions, et
dans lequel, lorsque l'écran relatif à une fonction quelconque parmi la pluralité de fonctions est affiché, l'unité de commande d'affichage (11) est agencée pour afficher l'écran de notification d'état pour notifier l'état du processus dans la fonction.

10. Le dispositif de commande d'affichage selon la revendication 9, dans lequel lorsque l'écran relatif à une fonction quelconque parmi la pluralité de fonctions est affiché, l'unité de commande d'affichage (11) est agencée pour afficher l'écran de notification d'état dans une partie de la zone d'affichage.

11. Un dispositif électronique comprenant :
un dispositif de commande d'affichage selon l'une quelconque des revendications 1 à 10 ; et
un dispositif de traitement (1) qui exécute le processus.

12. Un procédé de commande d'affichage comprenant l'affichage, dans une zone d'affichage (14), d'un écran de notification d'état pour notifier à un utilisateur un état d'un processus, l'écran de notification d'état comprenant une première image d'opération actionnable par l'utilisateur pour faire en sorte que l'écran de notification d'état ne soit pas affiché, et l'affichage d'une deuxième image d'opération actionnable par l'utilisateur pour faire en sorte que le processus soit annulé ; **caractérisé par le fait que**
la première image d'opération est un dessin qui imite une flèche indiquant une direction de mouvement de l'écran de notification d'état ;
en réponse au fonctionnement de la première image d'opération, le passage de l'écran de notification d'état à un état non affiché en effectuant un affichage d'animation de l'écran de notification d'état qui déplace l'écran de notification d'état dans la direction de mouvement que la flèche indique et pour sortir de la zone d'affichage (14) ; et
dans le cas où une opération de réaffichage est effectuée par l'utilisateur, qui est un mouvement qui est l'inverse de l'affichage d'animation de l'écran de notification d'état qui déplace l'écran de notification d'état dans la direction opposée à la direction de mouvement que la flèche indique depuis l'extérieur de la zone d'affichage (14), afficher à nouveau l'écran de notification d'état.

13. Un programme informatique comprenant des instructions pour amener le dispositif selon la revendication 1-10 à exécuter les étapes du procédé selon la revendication 12.
